# EUROPEAN PATENT APPLICATION

(11) **EP 1 967 994 A1**
(43) Date of publication of application: **10.09.2008**
(21) Application number: 08152199.9
(22) Date of filing: 03.03.2008
(51) Int. Cl.: G06Q 10/00

(54) **A system for capturing project information over a network**

(30) Priority: 06.03.2007 SE 0700539
(71) Applicant: Projektkontoret I Skandinavien AB, 722 46 Västerås (SE)
(72) Inventor: Beutler, Jim, 722 47 Västeras (SE)
(74) Representative: Holmberg, Nils Anders Patrik

(57) **Abstract**

A system 200 for capturing project information over a network 213 and for processing the information into a computerized project management tool. The system 200 comprises a computerized project management tool adapted to store time, resource and cost related data associated with a project. The system has a user interface with a project overview comprising a first time line 501 and a second time line 502 accessible over the network 213 by a user via a web browser. The first time line 501 comprising buttons 503a, 503b, 503c, 503d for activating fields for data entry and submission of data by the user, and the second time line 502 comprises graphical indicators 504a-504i adapted to show status of time, resource and cost data. A services API is adapted to invoke transactions with the computerized project management tool based on data contained in submitted fields.

## Description

### TECHNICAL FIELD

The present invention generally relates to systems adapted to provide a bridge between a user interface and office systems. More particularly, the present invention relates to a system adapted to capture and present status of project-related time and expense data into a computerized project management tool.

### BACKGROUND ART

Many businesses employ on-site applications to support their project operations, including accounting software applications, time-keeping software applications, and similar. Moreover, to provide a self service project management, web-based services are often required. Such web based services are often used to interconnect unrelated applications.

A trend is that project members to a greater extent record their own time and related data into a project management system. It is critical that such computerized project management tool receive and accurately record the data. A known problem is to present status of how a project progress in a manner accessible and understandable to different categories of users of the computerized project management tool.

WO2004/077305 relates to a system for managing and exchanging data relating to a technical project. The system comprises a data processing installation with a conversion device. The system enables presentation of project overview in tree structures.

FI112883 describes a method for controlling time, resource information and documents in a project, as a response of user commands. The method includes creation of an interface for communication between a user and a computer system. The interface displays symbols to the user and receives user commands by means of a cursor. The interface displays a number of different symbols for presentation of a project's time and resource information, and other symbols for presentation of characteristics of corresponding documents.

A problem when capturing and displaying information in a system of a project, is to provide users with an easily understood overview of a current project status.

Yet another remaining problem is to provide users with limited experience of project management tools with an environment to enter project related data in over a network, and to process the project related data such that status overview is communicated to clients such that a complete overview of project status is presented on a single screen over the network.

### SUMMARY OF THE INVENTION

An aim of the invention is to solve the above mentioned problems as well as other related problems in previous known systems. An object of the invention is to provide a system for capturing project information over a network and for processing the information, further the system is enabled to present a project overview common to projects comprising information processed by the system and further the system enables presentation and user access to complex project related data in a more efficient manner than by previous known systems. This object is achieved by a system according to the independent patent claim 1. Such system comprises a user interface providing a first and a second time line accessible over a network by a web browser, the first time line comprises buttons, associated to a phase of a project, for activating fields for data entry and the second time line comprises graphical indicators adapted to show status of time, resources and costs in any combination. The system further comprises a computerized project management tool. The computerized project management tool is adapted to store time, resource and cost data associated with the project. A services API is adapted to invoke transactions with the computerized project management tool based on data contained in submitted fields.

An advantage with the invention at hand is that the project overview is common to all user categories of a project, and that the project overview is displayed by means of the user interface at some stage of a user log-in process.

Another advantage with the invention is that a decision point, associated to a graphical indicator straight below the decision point, is activated after users have completed activities in the associated proceeding phase. Each decision point must by checked by a certain higher level user, such as a member of a steering committee, before next preceding phase may be completed.

Another advantage with the invention is that it enables relations between complex data in the computerized project management tool to be presented with graphical indicators in a standardized manner, common to all users, which reduces risk of misinterpretation of status of the project when users interact with each other.

### BRIEF DESCRIPTION OF THE DRAWINGS

The present invention will be described in more detail in connection with the enclosed schematic drawings.
Figure 1 is a diagrammatic view of the computing system environment on which embodiments of the present invention may be implemented.
Figure 2 is a simplified overview of a client and a server environment according to an embodiment of the present invention.
Figure 3 is a simplified block diagram of a project management application framework providing capturing of project information, processing information and displaying information.
Figure 4 is a simplified processing flow diagram of interaction at a project page according to an embodiment of the invention.
Figure 5 is an example of a project page according to an embodiment of the invention.

### DETAILED DESCRIPTION OF THE INVENTION

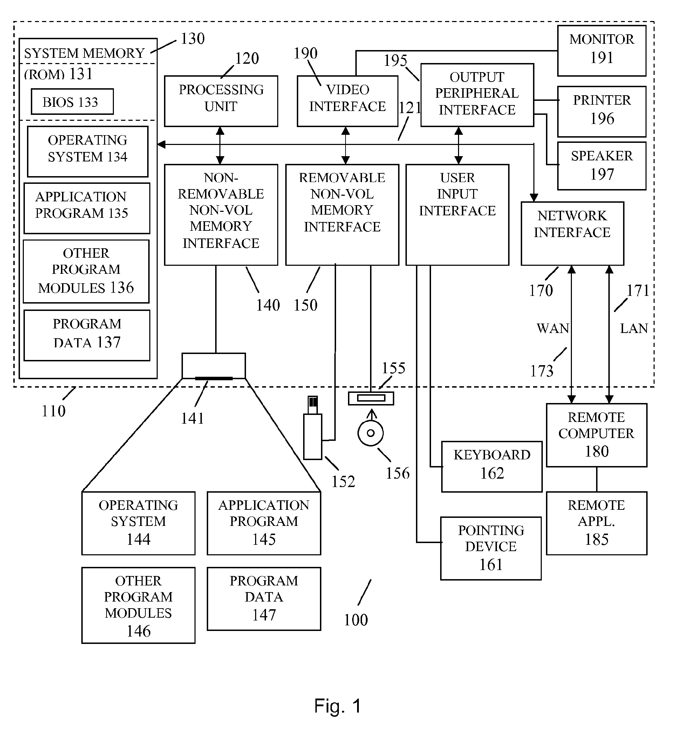

Prior to describing the present invention in detail, one embodiment of an environment in which it can be used is described in figure 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the example.

The invention is operational with numerous other general purpose or special purpose computing system environment or configurations. Examples of well-known computing systems, environments, and/or configurations that may be suitable for use with the invention include, but are not limited to, personal computers, server computers, hand-held or laptop devices, multiprocessor systems, programmable consumer electronics, network PCs, mobile phones, distributed computing environments that include any of the above systems or devices, and alike.

The invention may be described in general context of computer-executable instructions, such as program modules, being executed by a computer. Generally, program modules include routines, programs, managed code, User API, objects, components, data structures etc. that perform particular tasks or implement particular abstract data types. The invention may also be practiced in distributed computing environments where tasks are linked trough a communications network. In a distributed computing environment, program modules may be located in both local and remote computer storage media including memory storage devices.

With reference to figure 1, an exemplary system for implementing the invention, and in particular the server side 218, includes a general purpose computing device in the form of a computer 110. Components of computer 110 may include, but are not limited to, a processing unit 120, a system memory 130, and a system bus 121 may be any of several bus structures including a memory bus or memory controller, a peripheral bus, and a local bus using any of a variety of bus architectures. By way of example, such architecture include Industry Standard (ISA) bus, Micro Channel Architecture (MCA) bus, Enhanced ISA (EISA) bus, Video Electronics Standards Association (VESA) local bus, and Peripheral Component Interconnection (PCI).

The system memory 130 includes computer storage media in the form of volatile and/or nonvolatile memory such as read only memory such as read only memory (ROM) 131 and random access memory (RAM) 132. A basic input/output system 133 (BIOS), containing the basic routines help to transfer information between elements within computer 110, such as during start-up, is typically stored in ROM 131. RAM 132 typically contains data and/or program modules that are immediately accessible to and/or presently being presently being operated on by processing unit 120. By way of example, but not limited to, Figure 1 illustrates operating system 134, application programs 135, other program modules 136, and program data 137.

The computer 110 may also include other removable/non-removable volatile/non-volatile computer storage media. By way of example only, figure 1 illustrates a hard disk drive 141 that reads from or writes to non-removable, non volatile magnetic media, an optical disk drive 155 that reads from or writes to a removable optical disk 156. The hard disk drive 141 is typically connected to the system bus 121 through a non-removable memory interface such as interface 140, and magnetic disk drive 151, Universal Serial Bus (USB) memory devices 152 and optical disk drive 155 are typically connected to the system bus 121 by a dedicated memory interface, such as interface 150.

The drives and their associated computer storage media discussed above and illustrated in figure 1, provides storage of computer readable instructions, data structures, program modules and other data for the computer 110. In figure 1, for example, hard disk drive 141 is illustrated as storing operating system 144, application programs 145, other program modules 136, and program data 137. Operating system 144, application programs 145, other program modules 146, and program data 147 are given different numbers here to illustrate that, at a minimum, they are different copies.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connection depicted in figure 1 include a local area network (LAN) 171 and a wide area network (WAN) 173, but may also include other networks. Such networking environments are commonplace in offices, enterprise-wide computer networks, intranets and Internet. In a networked environment, program modules depicted relative to the computer 110, or portions thereof, may be stored in a remote memory storage device. It will be appreciated that the network connections shown are exemplary and other means of establishing a communication link between the computers may be used.

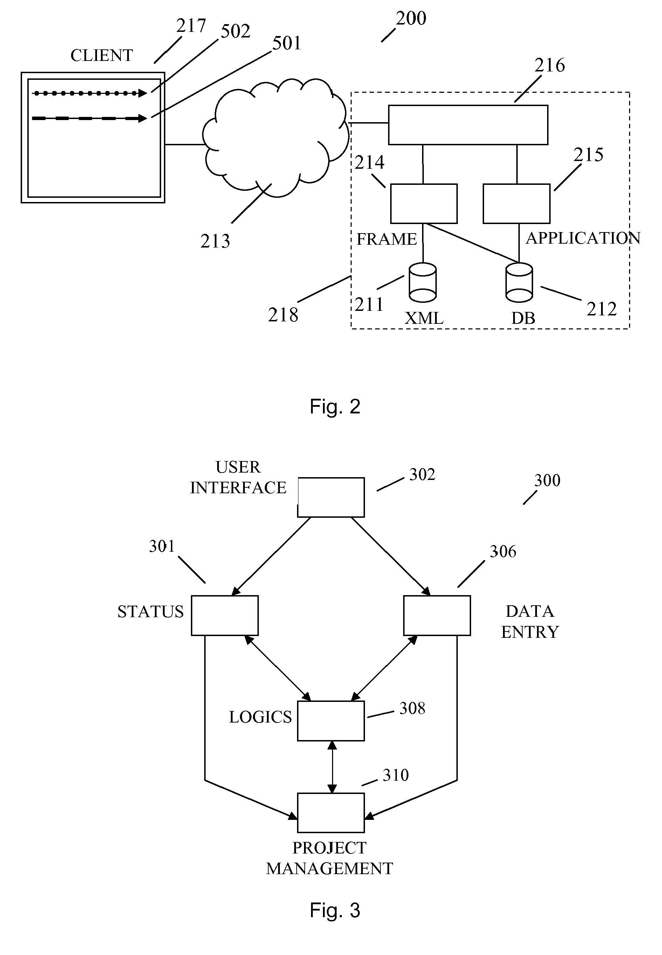

Figure 2 is a simplified overview of a system 200 for capturing project information over a network and for processing the information into a computerized project management tool, comprising a client 217 and a server 218 environment according to an embodiment of the present invention. The client 217 may have many alternative names, such as presentation layer, at least partly implemented by means of the services API. Software implemented by means of the services API support interaction with the client 217 and may comprise objects, classes and methods for graphical interaction and navigation. A network 213 enables communication between the client 217 and the server 218. Server functionality may be implemented at least partly based on XML 211 in the services API. A frame 214 uses an application database 212. The frame 214 may be implemented to access the database 212 to control user privileges during a log in process. The database 212 may further comprise information which relates a user to a role of the system. The role links the user to certain privileges and to which projects the user is authorized to access. An application 215 may comprise code which supports functionality on the client 217 side. The client 217 may be configured to present a project page 500 with a first 501 and a second 502 time line. An internet server 216 may be an IIS server. The services API may be called using .NET web services. The server 210 may comprise objects, classes and methods supporting navigation and business logics 308 where data access is provided by the services API. The database 212 may be configured to administrate communication with application 215 and related store procedures. The database 212 may further comprise classes supporting retrieval of information regarding what project role the user has, and what projects the user has privilege to access. Other classes may support retrieval, storage and update of documents in the system supported by the services API. The database 212 may further comprise classes to retrieve, create and update roles relating to a project.

The network 213 may be any type of network capable of supporting data transmissions, including a public switching network, a local area network, a wide area network (including the Internet), a cellular or digital wireless network, or any other type of network. The present invention is independent of the transmission medium.

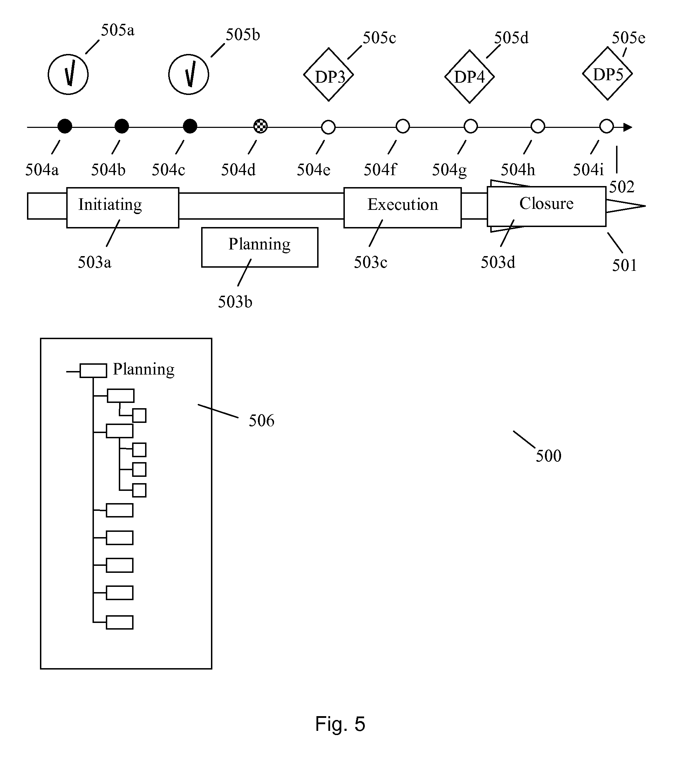

Figure 3 is a simplified block diagram 300 of a project management application framework providing capturing of project information, processing information and presenting the information. The user interface 302 interacts with a plurality of components to present status 301 of a certain project, and to handle data entry 306 relating to the project. The project management 310 software and relating business logics 308 may be integrated into one common module or separate modules. Examples on suitable functionality supporting the user interface 302, which may be implemented as logics 308 or in the project management module 310, are functionality to store documents to the server 218, create new projects, add or delete roles relating to a project. Further functionality supports presentation of phases, such as 503a-503d of figure 5, of the project and of project status indication, such as graphical indicators 504a-504i of figure 5. The user interface 302 of the project management application framework comprises functionality which the user interacts with, such as according to exemplified presentations made in figure 5. Such functionality comprises presentation of status 301 of data in the project management module 310. Presentation of status involves applying logics 308 on project data. Data entry 306 involves that users enters time, resource and cost data related to a certain project. A project member may for instance on a daily basis enter time spent on a certain project. A project manager may enter consumed resources on a weekly basis, such as material, and/or actual available active project members compared to planned active project members. Entry of cost data may relate to consumed material, purchase orders, tax, printing costs, transportation etc. Project data may be arranged by the project management module according to an Earned Value Analysis (EVA) model. In such a model input may comprise budgeted cost of work scheduled, actual cost of work performed which are foundations to earned value calculations. Additional input may be Budget at Completion (BAC) which can be used to make further calculations. An EVA module may also comprise trend analysis. Such trends may be earned value trend, cost performance indices, estimate to completion or complete performance index. Other analysis may be percentage spent at a certain report point, percentage complete at a certain report point or percentage of project schedule to be achieved at the report point.

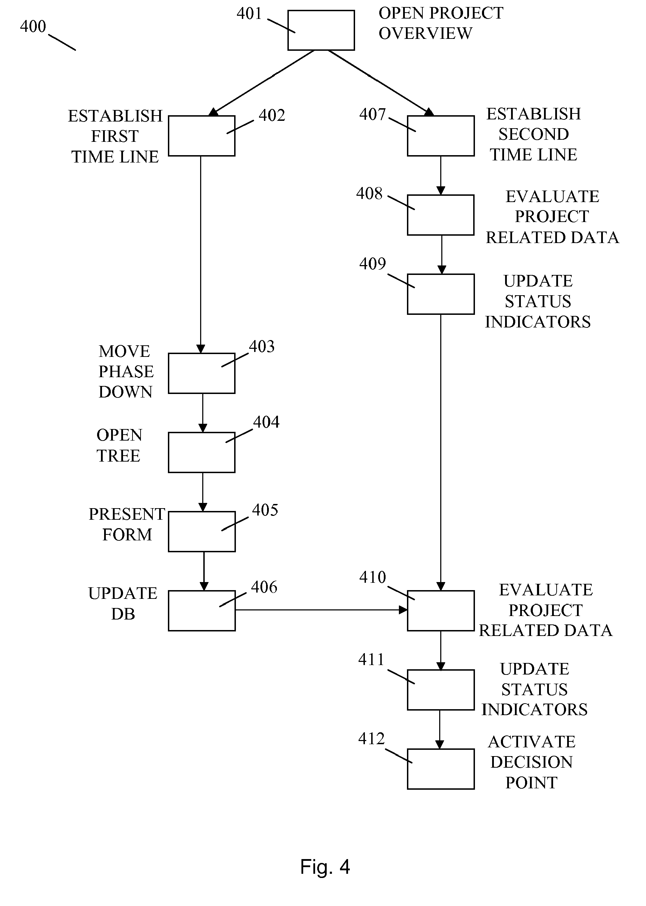

Figure 4 is a simplified processing flow diagram 400 of user interaction with a project overview page 500 according to an embodiment of the invention. The method involves that a user interacts with the server 218 from the client 217 and initiates an access to the project overview 401. The first time line 402 is established, which involves access of data in the database 212 across the network 213. The server 218 is adapted to host data of the database 212 associated to the first 501 and second 502 time line. Data that is made accessible by a user by means of graphical items on the first time line 501 may involve information on phases and tree structures relating to the phases, such as the exemplified phases 503a-503d of figure 5. As the user selects a phase, for instance by selecting a button related to a phase by means of a mouse, the phase is moved down 403 on the screen of the client 217. Hence, a selected phase is moved down from the time line 501. The method further involves establishing 407 a second time line. After the project overview is opened 401 project related data is evaluated 408. The second time line 502 comprises graphical indicators. The graphical indicators may be implemented as circular colored indicators. The graphical indicators present a summary of project related data such as consumed time, resource and cost in any combination.

As a button representing a phase 503a-503d is selected by the user, the button is moved down from the first time line, and an associated tree structure 506 is opened 404. There may be a number of different ways for a user to interact and update data in the server 218. At least one manner in which data is updated is by means of a form 405 or a document which the user opens by selecting it from the tree structure 506. Such a form may include fields for time, resource or expense data related to the project. Update of the database 406 is made towards the server 218. Data in submitted fields may be handled by the services API adapted to invoke transactions with the computerized project management tool. The computerized project management tool comprises project management rules written in managed code. Such rules are well known to a person skilled in the art. In one embodiment the first 501 and second time line 502 of the client 217 comprise embedded services API calls adapted to invoke project management rules for processing data contained within the submitted fields.

The graphical indicators, exemplified as 504a-504i, in figure 5 are updated 409 based on the evaluation of project related data. Alternatively to evaluate project data, a plurality of status categories relating to the graphical indicators may be retrieved. Status categories such as flags or records related to graphical indicators may be held in the server environment 218. Values of such status categories may be based on previous evaluation of project data. The graphical indicators represent an overview of progress of the project, where sets of the graphical indicators represent a summary of time, resource or cost associated to each button 503a-503d corresponding to a phase. As a project progress and activities are finished, project categories are retrieved 410 and evaluated by the system 200 until associated graphical indicators are subject to be updated 411. When all activities corresponding to a phase have been completed, the system activates 412 a decision point in the user interface 302.

Figure 5 is an example of a project page 500 according to an embodiment of the invention. It should be noted that the text in buttons of the first time line 501, of figure 5, representing phases are examples. The exemplified phases initiating, planning, execution and closure may be exchanged with other appropriate phases, such as budgeting, executing, building, testing etc. The project page 500 may be accessible in the client 217 by means of a web browser. A number of buttons 503a-503d are typically arranged on or close along the length of the first time line 501. The first time line 501 in figure 5 may at least partly be drawn like an arrow. Many other embodiments of the time line 501 are possible. The two time lines are straight lines, stretching from left to right. A given position on each time line represents the same stage of progress of the project. Distances from left to right in the two timelines does not necessarily represent absolute time, rather the timelines represent an overall order in which phases are executed. The first phase being furthest to the left, and the last phase being furthest to the right.

The exemplified buttons 503a-503d, of figure 5, typically symbolizes phases of the project. Examples of phases are initiating, planning, execution and closure. In an embodiment the second time line 502 may comprise circular colored indicators 504a-504i. The indicators 504a-504i in figure 5 are positioned on the time line 502. Indicators may also be positioned directly above or below the time line 502. Compared to previous known systems the exemplified project page 500 displays a standardized project overview, common to all users of a project, and shown at some stage at a user log-in process. Typically sets of indicators relate to certain phases or buttons 503a-503d. Hence, there exists a direct relationship between the two time lines. In figure 5 the three status indicators to the left 504a-504c relates to the initiating phase 503a. In figure 5 the status indicators 504a-504c indicates that the project data associated to each indicator is in a ready state. In the example shown in figure 5a a filled circle corresponds to green, a chessboard patterned circle corresponds to yellow and a non-filled circle corresponds to red. Green may correspond to a ready state, such as that all activities relating to budgeting are fulfilled. Yellow may correspond to that ready-state conditions for one or a few data structures are not fulfilled. Red may correspond to that ready-state condition for a number of data structures are not fulfilled or that none ready-state condition is fulfilled. In an embodiment additional colors may be used. In the case the status indicators represents calculations made by an EVA module the colors of indicators may be set according to the following. Red may represent that the project is highly behind schedule or over budget and must be treated with urgency. Yellow may represent that the project is moderately behind schedule or over budget. Green may represent that the project is on track. In an embodiment the indicators 504a-504c of figure 5 would be green. The next set of status indicators 504d-504e relate to the planning phase 503b.

Figure 5 further indicates that as a user selects a certain phase, such as planning 503b, a tree 506 with associated project data appears on the client screen. By means of selecting nodes in the tree 506 the user gets access to fields for data entry. For instance time, resource and expense data is entered and submitted to the computerized project management tool by means of such fields.

Figure 5 further indicates that at least one graphical indicator 504c, 504e, 504g, 504i is positioned between two neighboring phases. After all activities in the preceding phase has been completed the indicator turns into a stand-by mode, such as turning from red to yellow. Straight above each indicator between phases is a relating decision point 505b, 505c, 505d, 505e which a member of the steering committee, or another higher level user, has to check before the indicator goes into ready mode, such as turning green. The decision points 505b, 505c, 505d and 505e gives the project manager a chance to check the validity of all checked activities before the project proceeds to the next phase. This implies that project members have access to the same graphical overview of the project as a project manager, including decision points. But it is typically the project manager, or a similar user category, that has privileges to update the decision point. The decision points 505a and 505b in figure 5 have been checked by a user with privilege to update decision points. A decision point is available for update providing that graphical indicators associated up to the decision point indicates a ready state. For example in order to be able to update the decision point indicated as BP3 505c in figure 5, the graphical indicators 504a up to 504d should indicate green and the indicator 504e straight below the decision point should indicate yellow. The decision point BP3 505c may than be updated by an authorized user, such as a member of the steering committee. Decision points may change color or shape, for instance depending on status of associated activities or actual costs. A rhomb or red color may indicated that no activities are in ready-state, a square or yellow may indicate that some activities are in ready-state and round or green may indicate that all activites are in ready-state.

Implementation of the server 218 and client 217 environments may be made in a multitude of software and hardware environments well know to a person skilled in the art. Such an environment may include configuring API calls to .NET web services.

Although the present invention has been described with reference to particular embodiments, a person skilled in the art will recognize that changes may be made in form and detail without departing from the spirit and scope of the invention.

## Claims

1. A system for capturing project information over a network and for processing the information into a computerized project management tool, the system comprising:
a computerized project management tool adapted to store time, resource and cost related data associated with a project;
a user interface with a project overview comprising a first time line and a second time line accessible over the network by a user via a web browser, the first time line comprising buttons for activating fields for data entry and submission of data by the user, and the second time line comprises graphical indicators adapted to show status of time, resource and cost data; and
a services API adapted to invoke transactions with the computerized project management tool based on data contained in submitted fields.

2. The system according to claim 1 wherein sets of the graphical indicators shows a summary status of time, resource and cost related data associated to each button, and the first and second time line are positioned parallel to each other in a top area of the user interface and sets of graphical indicators are associated to each of the buttons.

3. The system according to claim 2 wherein a server is adapted to host data associated to the first and second time line and to serve the first and second time line to users according to project management rules written in managed code.

4. The system according to claim 3 where a graphical symbol representing a decision point is positioned above the first time line directly after a related phase.

5. The system according to claim 3 wherein the buttons contain calls to the services API.

6. The system according to claim 3 wherein the services API is called using .NET web services.

7. The system according to claim 3 wherein the services API is called using remote calls.

8. The system according to claim 3 wherein the first and second time line comprise embedded services API calls adapted to invoke project management rules for processing data contained within the submitted fields.

9. The system according to any proceeding claim where the graphical indicators are round and display the colors green, yellow or red.

10. The system according to any proceeding claim where each button representing a phase is configured to move down from the first time line when a user selects the button, and the user interface is configured to open a tree structure comprising activities associated to the phase.
